# EUROPEAN PATENT SPECIFICATION

(11) **EP 1 295 412 B1**
(45) Date of publication and mention of the grant of the patent: **20.07.2005**
(21) Application number: 01938277.9
(22) Date of filing: 29.05.2001
(51) Int. Cl.: H04B 7/26, H04L 12/28, H04M 11/08

(54) **TRANSMISSION OF INFORMATION TO RECEIVING EQUIPMENT**
INFORMATIONSÜBERTRAGUNG ZU EINER EMPFANGSEINRICHTUNG
TRANSMISSION D'INFORMATIONS A UN EQUIPEMENT RECEPTEUR

(30) Priority: 02.06.2000 FI 20001326
(43) Date of publication of application: 26.03.2003
(73) Proprietor: TeliaSonera Finland Oyj, 00510 Helsinki (FI)
(72) Inventor: POHJANEN, Petri, FIN-90100 Oulu (FI); MATILAINEN, Arto, FIN-90420 Oulu (FI); KOMU, Toni, FIN-90500 Oulu (FI)
(74) Representative: Simmelvuo, Markku
(86) International application number: PCT/FI2001/000515
(87) International publication number: WO 2001/093461

(56) References cited:
- EP-A2- 0 971 327
- EP-A2- 1 030 272
- WO-A1-98/56181
- DE-A1- 4 424 380
- DE-U1- 29 910 700
- 'Park K:7 Dial-Up networking profile, Bluetooth specification v.1.0B', [Online] 01 December 1999, pages 220 - 242, XP002946350 Retrieved from the Internet: <URL:www.bluetooth.com/link/spec/bluetooth_ k7.pdf> [retrieved on 2001-09-18]

## Description

### FIELD OF THE INVENTION

The present invention relates to telecommunication systems. In particular, the present invention relates to a method and a system for transmitting media or control information to receiving equipment.

### BACKGROUND OF THE INVENTION

Normally, to listen to and follow different forms of media, the listener only can select among the media supply available at the moment. This is used to mean e.g. that to listen a certain type of music, the listener has to repeat it either on a CD disc desired by him or her (CD, Compact Disc), or on such a radio channel whose supply at the moment corresponds to the preferences of the listener. Correspondingly, when wishing to repeat certain music in a different environment, the listener has to have the piece of music in question with him or her in a form suitable for repeating, such as a CD disc. Therefore, a CD disc being listened to at home must be taken along to the desired environment, in case one wishes to proceed with the repeating also in this environment.

The prior-art solution for the use of a certain tape recording or sort of music in any kind of environment has been the taking along of the tape recording in question, or its downloading into the media equipment of the environment concerned. For the listening of a certain piece of music, a DAB system (DAB, Digital Audio Broadcasting) may be used, with certain restrictions. The system enables one to listen to nearly any tape recording via a selection of radio channels. The disadvantage with this system is that the acquisition of equipment suitable for the purpose causes costs for the consumer and that the voice coding method used in the system has been developed and defined in the 1980's, thus being too old to transmit a musical tape recording of modern level.

Static information, such as Internet sites, can be followed on the computer, and e.g. on small PDA devices (PDA, Personal Digital Assistant). The problem is, however, that to be able to follow this kind of information, the user has to buy a computer or a small PDA device as described above.

However, the control system of different devices and the user interface for performing the control is often complicated. To control the device, there is a user interface as user-friendly as possible implemented in the device. The intelligence required by the functions has been placed in the control device so that it forms a configuration efficient enough to control the functionality. The disadvantage with this kind of system is, however, that the manufacturing and acquisition of equipment suitable for the purpose causes great cost items for the provider of the service and that in order to maintain the technique used in the system, a lot of work is required. In addition, the device may have been connected to the telecommunication network by cables, by a fixed line. This kind of procedure is relatively expensive and inflexible and does not offer great advantages. The telecommunication connection may also be implemented by a radio path, but this makes the connection expensive and the required equipment valuable.

The reference publication "Dial-up networking profile - Bluetooth specification v.1.0B" describes the usage of a cellular phone or modem by a computer as a wireless modem for connecting to a dial-up internet access server or using other dial-up services. The reference publication, however, describes only a solution where a wireless communication device acts as a modem.

The reference publication EP-A-0971327 describes a method and system for performing transactions, e.g. bank transactions. In the reference publication a wireless communication device is coupled to a HTML renderer and remote terminal. Data is received by the wireless communication device coupled to the remote terminal and rendered by the HTML renderer. The reference publication, however, describes only a solution where the wireless communication device acts as a modem.

### OBJECTIVE OF THE INVENTION

The objective of the invention is to eliminate the disadvantages referred to above, or at least significantly to alleviate them. One specific objective of the invention is to disclose a new type of method and system that enable one to transmit media or control information to desired equipment by means of a wireless communications device.

### BRIEF DESCRIPTION OF THE INVENTION

The present invention relates to the transmission of media and control information to receiving equipment. The media and control information is transmitted to the receiving equipment from the telecommunication network via a wireless communications device. There is not necessarily a direct connection from the receiving equipment itself to the telecommunication network for this transfer of information.

The invention relates to a method for using a wireless communications device for the transmission of media or control information from the telecommunication network to the receiving equipment. In the method, information is being transmitted between a wireless communications device and receiving equipment. This exchange of information is used to mean e.g. a communication taking place over the Bluetooth connection. The wireless communications device is preferably a mobile station, but it may also be e.g. a PDA device (PDA, Personal Digital Assistant) or any other wireless terminal device.

According to the invention, the wireless communications device sends a service request to the receiving equipment using wireless communication. In response to the service request, the receiving equipment sends information relating to the receiving equipment and/or desired service or product to the wireless communications device. Information relating to the receiving equipment is e.g. the piece of identification information of the receiving equipment. Information relating to the service or product is e.g. a menu to be sent to a wireless terminal device from receiving equipment or a service system connected to the telecommunication network, on which menu the desired service or product may be selected. Information relating to the service or product may also be a user interface connected with certain receiving equipment.

Further, the service request is sent to the service system, when the desired service or product has been selected using the wireless communications device. As a part of the service request there may be a piece of identification information connected with the receiving equipment. By means of the piece of identification information it is possible to enable e.g. the fact that the media or control information is delivered only to certain, identified receiving equipment. The piece of unambiguous identification information of the receiving equipment may be encrypted and/or signed before sending the piece of identification information to the service system. The piece of identification information has been encrypted e.g. with the public key of the service system and signed with the private signing key of the receiving equipment.

The service system handles the service request made and delivers the media or control information in accordance with the service request to the wireless communications device. The implementation of the service request may require that the party making the service request has to be authenticated. Also the receiving equipment may be authenticated when necessary. This makes it possible to enable e.g. the fact that certain type of information may be transmitted solely to certain receiving equipment. If the service requested by the user is, in addition, chargeable, the party making the service request is debited for the service requested. Media or control information received by a wireless communications device is transferred further to the receiving equipment. The information transferred to the receiving equipment may encrypted and/or signed. This kind of procedure may be followed e.g. in such a case when one wishes that only certain receiving equipment is capable of changing the encrypted information into a readable form. If it was a question about media information, then it may now be presented by means of the receiving equipment. Media information is used to mean any information that can be repeated by means of receiving equipment. In the case of control information, the receiving equipment may now be controlled in a manner as presented by the control information. The interpretation, implementation or displaying of media or control information may require one or more separate applications. This kind of application may be delivered to the receiving equipment via a wireless communications device, e.g. in conjunction with media or control information. In addition, it is possible to deliver to the wireless communications device an application which controls the transmission of information from the service system to the receiving equipment.

In one embodiment of the invention, the functions of a wireless communications device have been integrated as a part of the receiving equipment.

The invention also relates to a system for using a wireless communications device in transferring media or control information from the telecommunication network in a telecommunication system which comprises a telecommunication network, a wireless communications device, which is connected to the telecommunication network, a service system, which is connected to the telecommunication network, receiving equipment, and a telecommunication connection which is arranged in between the wireless communications device and receiving equipment. The system in accordance with the invention comprises a first transmission unit for sending the information relating to the receiving equipment and/or desired service product to the wireless communications device, a second transmission unit for sending the service request to the service system, when the desired service or product has been selected using the wireless communications device, a delivering unit for delivering the media or control information in accordance with the service request to the wireless communications device, and a transfer unit for transferring the service request with the wireless communications device (MS) to the receiving equipment (STB) and the information received by the wireless communications device from the service system to the receiving equipment via the telecommunication connection.

In one embodiment of the invention, the system comprises displaying means for displaying the information received from the wireless communications device on the receiving equipment.

In one embodiment of the invention, the system comprises controlling means for controlling the receiving equipment in accordance.with the control information received from the wireless communications device.

In one embodiment of the invention, the system comprises delivering means for delivering the user interface connected with certain receiving equipment to the wireless communications device.

In one embodiment of the invention, the system comprises an encryption and/or signing unit for encrypting and/or signing the information transmitted from the receiving equipment or delivered to the receiving equipment.

In one embodiment of the invention, the system comprises an authentication unit for authenticating the party making the request and/or the receiving equipment, and a payment order unit for debiting the party making the service request for the service requested.

In one embodiment of the invention, the service system comprises transmission means for sending the actual application needed in the interpretation of the media or control information via a wireless communications device to the receiving equipment, and the receiving equipment comprises receiving means for receiving the actual application needed in the interpretation of the media or control information.

In one embodiment of the invention, the service system comprises transmission means for sending to the wireless communications device an application which is used to control the data transmission from the service system to the receiving equipment.

In one embodiment of the invention, the wireless communications device is a mobile station.

In one embodiment of the invention, the wireless communications device is a PDA device.

In one embodiment of the invention, the telecommunication connection is a wireless Bluetooth connection.

In one embodiment of the invention, the telecommunication network is a mobile communication network and/or Internet network.

The present invention enables the wireless purchase of a service or product independent of time or place. Furthermore, the invention enables the wireless possibility of repeating and saving independent of time and place for any static or dynamic media information available on the Internet, mobile communication network or some other telecommunication network.

### BRIEF DESCRIPTION OF THE DRAWINGS

In the following section, the invention will be described in detail with the aid of a few examples of its embodiments, in which
Fig. 1 represents the function of the method in accordance with the invention,
Fig. 2a represents one advantageous system in accordance with the invention,
Fig. 2b represents one advantageous system in accordance with the invention,
Fig. 3a represents one embodiment of the invention by means of a signaling flow chart, and
Fig. 3b represents one embodiment of the invention by means of a signaling flow chart.

### DETAILED DESCRIPTION OF THE INVENTION

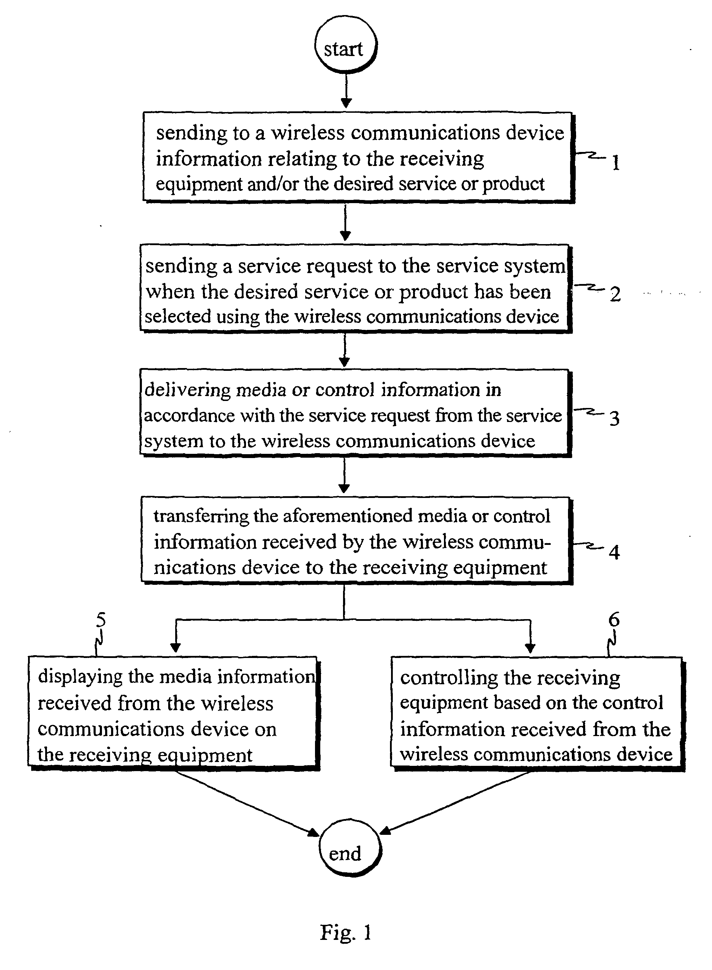

Fig. 1 represents the function of the method in accordance with the invention. In the method as shown in Fig 1 there is a wireless or wired telecommunication connection between the wireless communications device and the receiving equipment. The wireless communications device and the service system are connected to the telecommunication network.

As shown by block 1, the wireless communications device is sent information relating to the receiving equipment and/or desired service or product. When the desired service or product has been selected using the wireless communications device, the service system is sent a service request, block 2. The implementation of the service request may require the authentication of the party making the request and/or the receiving equipment. In addition, the party making the request is debited for the desired service or product, if the service or product is chargeable. As shown by block 3, the media or control information in accordance with the service request is delivered from the service system to the wireless communications device. The media or control information received is transferred further to the receiving equipment, block 4.

If the information received from the wireless communications device is media information, it is displayed on the receiving equipment, block 5. The media information is used to mean any information that can be repeated by means of receiving equipment. If the information is control information, the receiving equipment is controlled in a manner as required by the control information, block 6. The interpretation, implementation or displaying of media or control information may require one or more separate applications. This kind of application may be delivered to the receiving equipment via a wireless communications device e.g. in conjunction with the media and control information. Further, the wireless communications device may be sent an application which is used to control the data transmission from the service system to the receiving equipment.

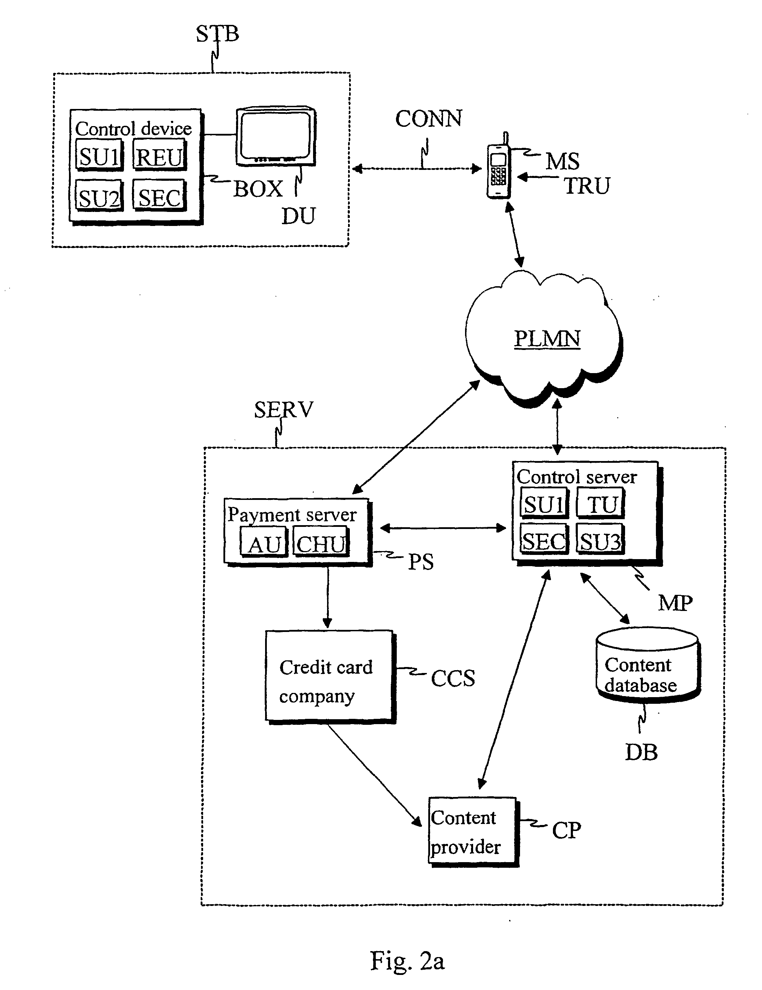

Fig. 2a represents one advantageous system in accordance with the invention. The system as shown in Fig. 2a comprises a wireless communications device MS. In this example the wireless communications device is a mobile station, but it may also be any other wireless device, e.g. a PDA device. The mobile station MS communicates with the receiving equipment STB by way of the telecommunication connection CONN. The telecommunication connection CONN is preferably a wireless connection, e.g. a Bluetooth connection, but it may also be a wired connection. The receiving equipment is used to mean any device or combination of several devices that is capable of repeating e.g. image, voice or some text or graphic-formed information, or combinations of these. In this example the receiving equipment STB comprises a set-top-box device BOX with a TV set DU attached to it.

The control device BOX comprises a first transmission unit SU1 for sending the information relating to the receiving equipment STB and/or the desired service or product to the mobile station MS, a second transmission unit SU2 for sending the service request to the service system SERV, reception means REU for receiving the actual application needed in the interpretation of the media information, and an encryption/or signing unit SEC for encrypting and/or signing the information transmitted from the receiving equipment STB or delivered to the receiving equipment STB. The first transmission unit SU1 and the second transmission unit SU2 do not necessarily refer to two separate units, instead they are supposed to mean the one and the same transmission unit. The first transmission unit SU1, second transmission unit SU2, reception means REU, and the encryption and/or signing unit SEC have been advantageously implemented by hardware or software components and are therefore not described in greater detail in this connection.

The mobile station MS is connected to the telecommunication network PLMN, to which there is connected also the service system SERV. The mobile station MS comprises, in addition, a transfer unit TRU which is used to control the data transmission from the service system SERV to the receiving equipment STB. The transfer unit TRU has been advantageously implemented by hardware or software components and are therefore not described in greater detail in this connection.

The telecommunication network PLMN is used to mean any telecommunication network which is capable of transmitting information in accordance with the invention. The telecommunication network PLMN is e.g. a mobile communication network or an Internet network. The service system SERV is used to mean a configuration consisting of one or more components or servers that enable the functions required by the invention. In this example, the service system SERV consists of a control server MP, a media database DB attached to the control server, a payment server PS, a credit card company CCS, and a content provider CP.

The control server MP comprises a first transmission unit SU1 for sending the information relating to the receiving equipment STB and/or the desired service or product to the mobile station MS, transmission means SU3 for sending the actual application needed in the interpretation of the media information via the mobile station MS to the receiving equipment STB, a delivering unit TU for delivering the media information in accordance with the service request received from the mobile station MS to the mobile station MS, and an encryption/or signing unit SEC for encrypting and/or signing the information transmitted from the receiving equipment STB or delivered to the receiving equipment STB. Further, the transmission means SU3 may be used to send to the mobile station MS an application which controls the data transmission from the service system SERV to the receiving equipment STB. The first transmission unit SU1, transmission means SU3, delivering unit TU, and the encryption and/or signing unit SEC have been advantageously implemented by hardware or software components and are therefore not described in greater detail in this connection. The information in accordance with the service request received from the mobile station MS may be delivered to the receiving equipment STB from the control server MP or any other server which is communicating with the mobile station MS.

The payment server PS comprises an authentication unit AU for authenticating the party making the request and/or the receiving equipment STB, and a payment order unit CHU for debiting the party making the service request for the service requested. The connection from the mobile station MS to the payment server PS may be arranged either directly or via the control server MP. The debiting may be arranged e.g. in such a way that it happens automatically without any specific measures taken by the user. The content provider CP is credited for the service or product purchased with an amount beforehand agreed via the credit card company CCS.

In one embodiment as shown in Fig. 2a, the receiving equipment STB is used to mean a car radio which supports the Bluetooth connection and other features substantial with regard to the invention. In this connection, three ways of retrieving the desired piece of music to the car radio are presented.
1. There is a list-type program on the radio. The user wishes to buy the piece (s)he is just listening to. (S)he activates the search of the piece of music in question on the hard disc of his/her car radio by pressing the Buy button displayed on the mobile station.
2. The user gives the search criteria for the piece of music by his/her mobile station and does the search. If the desired piece of music can be found, it may be downloaded via the mobile station into the car radio.
3. The user browses the lists connected with the pieces of music, e.g. by the artist's name etc., and selects the pieces desired by him or her and downloads them into the possible hard disc of the car radio.

The above example may be simplified so that the car radio itself comprises means to communicate with the telecommunication network, e.g. a mobile communication network. This is used to mean that the car radio comprises an HSCSD- (HSCSD, High Speed Circuit Switched Data), GPRS- (GPRS, General Packet Radio Service) or a UMTS card (UMTS, Universal Mobile Telecommunications System). If the rate of the data transmission used is sufficiently enough, the piece of music to be downloaded can be listened to in real time (streaming) without having to save it first to the hard disc of the car radio in its entirety.

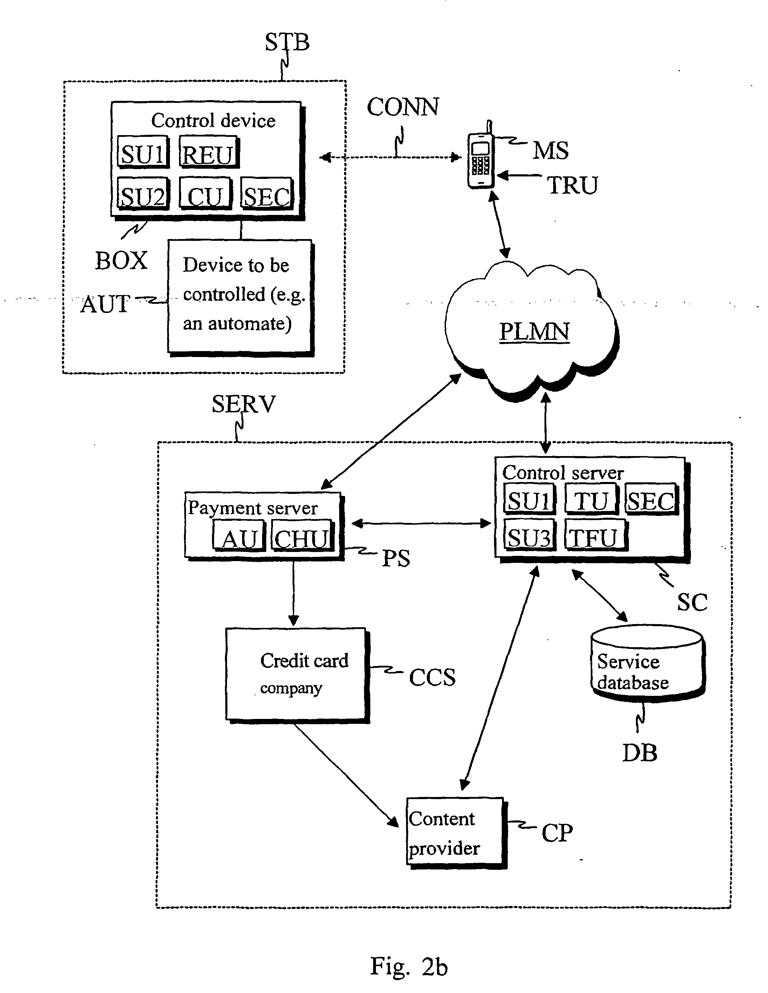

Fig. 2b represents one advantageous system in accordance with the invention. The system as shown in Fig. 2b comprises a wireless communications device MS. In this example the wireless communications device is a mobile station, but it may also be any other wireless terminal device, e.g. a PDA device. The mobile station MS communicates with the receiving equipment STB via the telecommunication connection CONN. The telecommunication connection CONN is advantageously a wireless connection, e.g. a Bluetooth connection, but it may also be a wired connection. The receiving equipment STB is used to mean any equipment that one wishes to control by means of the control information received from the telecommunication network PLMN. The receiving equipment STB may also be used to mean one device or a configuration of several devices. In this example the receiving equipment STB comprises a control device BOX, to which there is a beverage dispenser AUT attached.

The control device BOX comprises a first transmission unit SU1 for sending the information relating to the receiving equipment STB and/or the desired service or product to the mobile station MS, a second transmission unit SU2 for sending the service request to the service system SERV, reception means REU for receiving the actual application needed in the interpretation of the control information, controlling means CU for controlling the device to be controlled AUT based on the control information received from the mobile station MS, and encryption and/or signing unit SEC for encrypting and/or signing the information transmitted from the receiving equipment STB or delivered to the receiving equipment STB. The first transmission unit SU1 and the second transmission unit SU2 do not necessarily refer to two separate units, instead they may be used to mean the one and the same transmission unit. The first transmission unit SU1, second transmission unit SU2, reception means REU, controlling means CU, and the encryption and/or signing unit SEC have been advantageously implemented by hardware or software components and are therefore not described in greater detail in this connection.

The mobile station MS is connected to the telecommunication network PLMN, to which there is connected also the service system SERV. The mobile station MS comprises, in addition, a transfer unit TRU which is used to control the data transmission from the service system SERV to the receiving equipment STB. The transfer unit TRU has been advantageously implemented by hardware or software components and is therefore not described in greater detail in this connection.

The telecommunication network PLMN is used to mean any telecommunication network which is capable of transmitting information in accordance with the invention. The telecommunication network PLMN is e.g. a mobile communication network or an Internet network. The service system SERV is used to mean a configuration consisting of one or more components or servers that enable the functions required by the invention. In this example, the service system SERV consists of a control server SC, a service database DB attached to the control server, a payment server PS, a credit card company CCS, and a content provider CP.

The control server SC comprises a first transmission unit SU1 for sending the information relating to the receiving equipment STB and/or the desired service or product to the mobile station MS, transmission means SU3 for sending the actual application needed in the interpretation of the control information via the mobile station MS to the receiving equipment STB, a delivering unit TU for delivering the control information in accordance with the service request received from the mobile station MS to the mobile station MS, delivering means for delivering the user interface connected with certain receiving equipment STB to the mobile station MS, and an encryption/or signing unit SEC for encrypting and/or signing the information transmitted from the receiving equipment STB or delivered to the receiving equipment STB. Further, the transmission means SU3 may be used to send to the mobile station MS an application which controls the data transmission from the service system SERV to the receiving equipment STB. The first transmission unit SU1, transmission means SU3, delivering unit TU, delivering means TFU, and the encryption and/or signing unit SEC have been advantageously implemented by hardware or software components and are therefore not described in greater detail in this connection. The information in accordance with the service request received from the mobile station MS may be delivered to the receiving equipment STB from the control server SC or any other server which may communicate with the mobile station MS.

The payment server PS comprises an authentication unit AU for authenticating the party making the request and/or the receiving equipment STB, and a payment order unit CHU for debiting the party making the service request for the service requested. The connection from the mobile station MS to the payment server PS may be arranged either directly or via the control server SC. The debiting may be arranged e.g. in such a way that it happens automatically without any specific measures taken by the user. The content provider CP is credited for the service or product purchased with an amount beforehand agreed via the credit card company CCS.

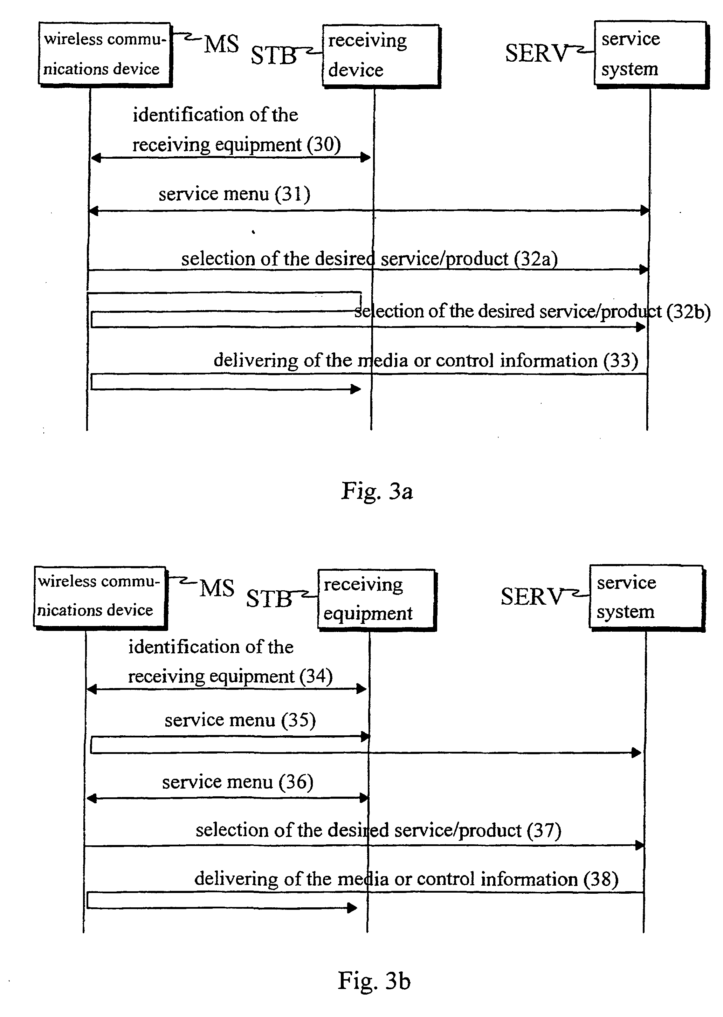

Fig. 3a represents one advantageous signaling flow chart illustrating the function of the present invention. The wireless communications device MS is preferably used to mean a mobile station. In addition, the example comprises receiving equipment STB and a service system SERV.

The user comes with his/her mobile station MS near the receiving equipment STB. Both the mobile station MS and the receiving equipment STB comprise a Bluetooth chip which enables a data transmission of short range between these two devices. The mobile station MS and the receiving equipment communicate with one another over the Bluetooth connection, arrow 30. Via the communication that took place, the service system SERV is informed of what media repeating equipment (e.g. stereo, television etc.) there is connected to the receiving equipment STB. The user establishes a connection to a certain WAP site (WAP, Wireless Application Protocol). Since information was earlier transmitted from the mobile station on what media repeating equipment there is connected to the receiving equipment STB, the user is able to distinguish among the media formats on the WAP site those repeatable via the receiving equipment STB. On the WAP site there may be classes such as MP3 (MP3, MPEG-1 audio layer-3), MPEG2 (MPEG, Moving Picture Experts Group), WWW (World Wide Web) and e-mail classes as alternatives. The star beside the class means that the information of this class may be repeated by means of the receiving equipment STB. In this way, the mobile station may be sent a menu on which one may select the desired media information, arrow 31.

The request for repeat may be sent from the mobile station MS directly to the service system SERV, if the piece of identification information relating to the receiving equipment STB was transmitted to the service system already at an earlier step, arrow 32a. In this way, media information to be transmitted later may be delivered to identifiable receiving equipment STB, in whose vicinity the mobile station is located. The request for repeat may alternatively be sent first to the receiving equipment STB, arrow 32b. The receiving equipment STB adds to the request for repeat the piece of identification information relating to the receiving equipment STB and sends the request for repeat via the mobile station MS further to the service system SERV. The piece of identification information relating to the receiving equipment STB may be signed and encrypted when necessary.

The piece of identification information is used to mean e.g. an unambiguous character string by means of which the receiving equipment STB can be identified. There may be a pair of keys of the public key method determined for the receiving equipment STB. The private key is only known to the receiving equipment STB itself, whereas the public key is generally available. When the piece of identification information has been logically attached to a certain public key, the receiving equipment STB may be sent encrypted messages. The identification of the receiving equipment STB may be arranged also in such a way that the receiving equipment STB generates an encrypted key number, by means of which the service system SERV encrypts and/or signs the requested media or control information. As shown by arrow 33, the service system SERV delivers the media information in accordance with the request for repeat via the mobile station MS to the receiving equipment STB to be repeated. The service system SERV may send to the mobile station also an application by means of which the mobile station MS controls the data transmission from the service system SERV to the receiving equipment STB. The service system SERV is advantageously used to mean a server which is capable of delivering the information requested by the mobile station MS. The server may be a specific server, arranged for a certain service, or any server of the telecommunication network from which it is possible to retrieve the desired information (music, WWW sites etc.) to the receiving equipment STB.

The identification of the user possibly connected with the service request and the payment measures may be effected before making the order or after it. The payment is effected in accordance with the instructions received from the service system, e.g. by means of a bank card number to be input during the connection. The measures may be effected also by means of a separate server included in the service system that is designed for the management and storing of media information available on the net. In that case, the possible payment measures may be automatically effected by means of user-specific information (name, telephone number etc.) saved on the server in question, authenticated by the user. The debiting may also be arranged via a normal telephone billing.

Fig. 3b represents one advantageous signaling flow chart illustrating the function of the present invention. The wireless communications device. MS is preferably used to mean a mobile station. In addition, the example comprises receiving equipment STB and a service system SERV.

The user comes with his/her mobile station MS near the receiving equipment STB. Both the mobile station MS and the receiving equipment STB comprise a Bluetooth chip which enables a data transmission of short range between these two devices. The mobile station MS and the receiving equipment STB communicate with one another over the Bluetooth connection, arrow 34. The receiving equipment STB automatically retrieves via the Bluetooth connection by means of the mobile station MS from the service system SERV a menu to which it adds the forms of media (stereo, television etc.) that can be repeated by means of the devices attached to the receiving equipment STB in question, arrow 35. As shown by arrow 36, the menu is transmitted from the receiving equipment STB to the mobile station MS. On the menu, the user may select the desired media information that can be repeated by means of the receiving equipment STB, arrow 37. As shown by arrow 38, the service system SERV delivers the information in accordance with the request for repeat via the mobile station MS to the receiving equipment STB to be repeated.

The search for the media information is started to the receiving equipment STB controlled by the mobile station MS in a communications system in which the receiving equipment STB enables the transfer of only the most essential information (such as information relating to the identification and possibilities of media repeat).

The examples as shown in Figs. 3a and 3b present the transmission of media information to the receiving equipment STB. The media information may be substituted with control information. In such a case, the receiving equipment is not used so much to repeat the information received as it is used to control the information by means of the control information received from the service system SERV. In that case, the receiving equipment STB comprises e.g. some game automate, beverage dispenser or similar. The receiving equipment STB is advantageously used to mean an arrangement in which in conjunction with the actual repeat and control device there is functioning separate equipment, system, or piece of software which transforms the information retrieved from the service system SERV via the mobile station MS and transmitted to the receiving equipment STB into such a form that the information is understandable to a repeat or control device each time connected to separate equipment, system, or piece of software.

The examples shown in Figs. 3a and 3b can be further simplified so that when there is a connection established by the mobile station MS to receiving equipment STB being located in the vicinity, information about the repeat devices connected to the receiving equipment STB is asked for from the service system SERV using the mobile station MS. In addition, in one embodiment of the invention, all the media information that the user wishes to be repeated is transmitted to the receiving equipment to be repeated without knowing whether it is possible to repeat the media information in question with the receiving equipment in question.

## Claims

1. A method for using a wireless communications device for transferring media or control information from a telecommunication network to receiving equipment, which method comprises the steps of:
transmitting information between a wireless communications device and receiving equipment;
**characterized in that** the method further comprises the steps of:
sending from the wireless communications device a service request to the receiving equipment using wireless communication;
sending from the receiving equipment to the wireless communications device in response to the service request information relating to the receiving equipment and/or the desired service or product;
sending the service request to the service system, when the desired service or product has been selected using the wireless communications device;
delivering the media or control information in accordance with the service request from the service system to the wireless communications device; and
transferring the media or control information received by the wireless communications device to the receiving equipment.

2. The method according to claim 1, **characterized in that** the media information received from the wireless communications device is displayed on the receiving equipment.

3. The method according to claim 1, **characterized in that** the receiving equipment is controlled based on the control information received from the wireless communications device.

4. The method according to any one of the preceding claims 1, 2 or 3, **characterized in that** the wireless communications device is sent information relating to the receiving equipment and/or the desired service or product from the receiving equipment.

5. The method according to any one of the preceding claims 1, 2, 3 or 4, **characterized in that** the service system is sent identification information relating to the receiving equipment.

6. The method according to any one of the preceding claims 1, 2, 3, 4 or 5, **characterized in that** the user interface connected with certain receiving equipment is delivered to the wireless communications device.

7. The method according to any one of the preceding claims 1, 2, 3, 4, 5 or 6, **characterized in that** the information transmitted from the receiving equipment or transmitted to the receiving equipment is encrypted and/or signed.

8. The method according to any one of the preceding claims 1, 2, 3, 4, 5, 6 or 7, **characterized in that** the media or control information is delivered only to identified receiving equipment.

9. The method according to any one of the preceding claims 1, 2, 3, 4, 5, 6, 7 or 8, **characterized in tha**t the service request is sent to the service system from the receiving equipment.

10. The method according to any one of the preceding claims 1, 2, 3, 4, 5, 6, 7 or 8, **characterized in that** the service request is sent to the service system from a wireless communications device.

11. The method according to any one of the preceding claims 1, 2, 3, 4, 5, 6, 7, 8, 9 or 10, **characterized in that**
the party making the service request and/or the receiving equipment is authenticated; and
the party making the service request is debited for the service or product requested, if the service or product is chargeable.

12. The method according to any one of the preceding claims 1, 2, 3, 4, 5, 6, 7, 8, 9, 10 or 11, **characterized in that** the actual application needed in the interpretation of the media or control information is sent via the wireless communications device to the receiving equipment.

13. The method according to any one of the preceding claims 1, 2, 3, 4, 5, 6, 7, 8, 9, 10, 11 or 12, **characterized in that** the wireless communications device is sent an application which controls the data transmission from the service system to the receiving equipment.

14. The method according to any one of the preceding claims 1, 2, 3, 4, 5, 6, 7, 8, 9, 10, 11, 12 or 13, **characterized in that** the functions of the wireless communications device are integrated as a part of the receiving equipment.

15. A system for using a wireless communications device for transferring media or control information from a telecommunication network to receiving equipment in a telecommunication system which comprises:
a telecommunication network (PLMN);
a wireless communications device (MS), which is connected to the telecommunication network (PLMN);
a service system (SERV), which is connected to the telecommunication network (PLMN);
receiving equipment (STB);
a telecommunication connection (CONN), which is arranged in between the wireless communications device (MS) and the receiving equipment (STB);
**characterized in that** the system comprises:
a first transmission unit (SU1) for sending the information relating to the receiving equipment (STB) and/or the desired service or product to the wireless communications device;
a second transmission unit (SU2) for sending the service request to the service system (SERV), when the desired service or product has been selected using the wireless communications device;
a delivering unit (TU) for delivering the media or control information in accordance with the service request to the wireless communications device (MS); and
a transfer unit (TRU) for transferring the service request with the wireless communications device (MS) to the receiving equipment (STB) and the information received by the wireless communications device (MS) from the service system (SERV) to the receiving equipment (STB) via the telecommunication connection (CONN).

16. The system according to claim 15, **characterized in that** the system comprises displaying means (DU) for displaying the information received from the wireless communications device on the receiving equipment (STB).

17. The system according to claim 15, **characterized in that** the system comprises controlling means (CU) for controlling the receiving equipment (STB) based on the control information received from the wireless communication device (MS).

18. The system according to any one of the preceding claims 15, 16 or 17, **characterized in that** the system comprises delivering means (TFU) for delivering the user interface connected with certain receiving equipment (STB) to the wireless communications device (MS).

19. The system according to any one of the preceding claims 15, 16, 17 or 18, **characterized in that** the system comprises an encryption and/or signing unit (SEC) for encrypting and/or signing the information transmitted from the receiving equipment (STB) or delivered to the receiving equipment (STB).

20. The system according to any one of the preceding claims 15, 16, 17, 18 or 19, **characterized in that** the system comprises:
an authentication unit (AU) for authenticating the party making the request and/or the receiving equipment (STB); and
a payment order unit (CHU) for debiting the party making the service request for the service requested.

21. The system according to any one of the preceding claims 15, 16, 17, 18, 19 or 20, **characterized in that**
the service system (SERV) comprises transmission means (SU3) for transmitting the actual application needed in the interpretation of the media or control information via the wireless communications device (MS) to the receiving equipment (STB); and
the receiving equipment (STB) comprises reception means (REU) for receiving the actual application needed in the interpretation of the media or control information.

22. The system according to any one of the preceding claims 15, 16, 17, 18, 19, 20 or 21, **characterized in that** the service system (SERV) comprises transmission means (SU3) for sending to the wireless communications device (MS) an application which is used to control the data transmission from the service system (SERV) to the receiving equipment (STB).

23. The system according to any one of the preceding claims 15, 16, 17, 18, 19, 20, 21 or 22, **characterized in that** the wireless communications device (MS) is a mobile station.

24. The system according to any one of the preceding claims 15, 16, 17, 18, 19, 20, 21 or 22, **characterized in that** the wireless communications device (MS) is a PDA device.

25. The system according to any one of the preceding claims 15, 16, 17, 18, 19, 20, 21, 22, 23 or 24, **characterized in that** the telecommunication connection (CONN) is a wireless Bluetooth connection.

26. The system according to any one of the preceding claims 15, 16, 17, 18, 19, 20, 21, 22, 23, 24 or 25, **characterized in that** the telecommunication network (PLMN) is a mobile communication network and/or an Internet network.

## Patentansprüche

1. Verfahren zum Nutzen einer drahtlosen Kommunikationseinrichtung bzw. Funkkommunikationseinrichtung für das Übertragen einer Medien-Information oder Steuerinformation von einem Telekommunikationsnetzwerk zu einem Empfangsgerät, wobei das Verfahren die folgenden Schritte aufweist:
Übertragen von Information zwischen einer Funkkommunikationseinrichtung und einem Empfangsgerät;
**gekennzeichnet dadurch, dass** das Verfahren ferner die folgenden Schritte aufweist:
Senden einer Dienstanforderung zu dem Empfangsgerät von der Funkkommunikationseinrichtung, wobei Funkkommunikation eingesetzt wird;
Senden einer Information, welche sich auf das Empfangsgerät und/oder den gewünschten Dienst oder das gewünschte Produkt bezieht, von dem Empfangsgerät zu der Funkkommunikationseinrichtung in Reaktion auf die Dienstanforderung;
Senden der Dienstanforderung an das Dienste- bzw. Service-System, wenn der gewünschte Dienst oder das Produkt ausgewählt wurde, wobei die Funkkommunikationseinrichtung eingesetzt wird;
Liefern der Medien- oder Steuerinformation entsprechend der Dienstanforderung von dem Service-System an die Funkkommunikationseinrichtung; und
Übertragen der Medien- oder Steuerinformation, welche durch die Funkkommunikationseinrichtung empfangen wird, an das Empfangsgerät.

2. Verfahren nach Anspruch 1, **dadurch gekennzeichnet, dass** die Medieninformation, welche von der Funkkommunikationseinrichtung empfangen wird, auf dem Empfangsgerät angezeigt wird.

3. Verfahren nach Anspruch 1, **dadurch gekennzeichnet, dass** das Empfangsgerät basierend auf der Steuerinformation, welche von der Funkkommunikationseinrichtung empfangen wird, gesteuert wird.

4. Verfahren nach einem der vorausgehenden Ansprüche 1, 2 oder 3, **dadurch gekennzeichnet, dass** der Funkkommunikationseinrichtung Information, welche sich auf das Empfangsgerät und/oder den gewünschten Dienst oder das Produkt bezieht, von dem Empfangsgerät gesendet wird.

5. Verfahren nach einem der vorausgehenden Ansprüche 1, 2, 3 oder 4, **dadurch gekennzeichnet, dass** dem Service-System I-dentifikationsinformation gesandt wird, welche sich auf das Empfangsgerät bezieht.

6. Verfahren nach einem der vorausgehenden Ansprüche 1, 2, 3, 4 oder 5, **dadurch gekennzeichnet, dass** das Nutzer-Interface, welches mit einem bestimmten Empfangsgerät verbunden ist, der Funkkommunikationseinrichtung geliefert wird.

7. Verfahren nach einem der vorausgehenden Ansprüche 1, 2, 3, 4, 5 oder 6, **dadurch gekennzeichnet, dass** die Information, welche von dem Empfangsgerät gesendet wird oder zu dem Empfangsgerät gesendet wird, verschlüsselt und/oder signiert ist.

8. Verfahren nach einem der vorausgehenden Ansprüche 1, 2, 3, 4, 5, 6 oder 7, **dadurch gekennzeichnet, dass** die Medien- oder Steuerinformation nur zu dem identifizierten Empfangsgerät geliefert wird.

9. Verfahren nach einem der vorausgehenden Ansprüche 1, 2, 3, 4, 5, 6, 7 oder 8, **dadurch gekennzeichnet, dass** die Dienstanforderung dem Service-System von dem Empfangsgerät gesendet wird.

10. Verfahren nach einem der vorausgehenden Ansprüche 1, 2, 3, 4, 5, 6, 7 oder 8, **dadurch gekennzeichnet, dass** die Dienstanforderung an das Service-System von einer Funkkommunikationseinrichtung gesendet wird.

11. Verfahren nach einem der vorausgehenden Ansprüche 1, 2, 3, 4, 5, 6, 7, 8, 9 oder 10, **dadurch gekennzeichnet, dass** die Person, welche die Dienstanforderung durchführt,
und/oder das Empfangsgerät beglaubigt wird; und die Person, welche die Dienstanforderung durchführt, für den angeforderten Dienst oder das angeforderte Produkt belastet wird, wenn der Dienst oder das Produkt verrechenbar ist.

12. Verfahren nach einem der vorausgehenden Ansprüche 1, 2, 3, 4, 5, 6, 7, 8, 9, 10 oder 11, **dadurch gekennzeichnet, dass** die aktuelle Anwendung, welche für die Interpretation der Medien- oder Steuerinformation benötigt wird, über die Funkkommunikationseinrichtung an das Empfangsgerät gesendet wird.

13. Verfahren nach einem der vorausgehenden Ansprüche 1, 2, 3, 4, 5, 6, 7, 8, 9, 10, 11 oder 12, **dadurch gekennzeichnet, dass** der Funkkommunikationseinrichtung eine Anwendung gesendet wird, welche die Datenübertragung von dem Service-System an das Empfangsgerät steuert.

14. Verfahren nach einem der vorausgehenden Ansprüche 1, 2, 3, 4, 5, 6, 7, 8, 9, 10, 11, 12 oder 13, **dadurch gekennzeichnet, dass** die Funktionen der Funkkommunikationseinrichtung als Teil des Empfangsgerätes integriert sind.

15. System zum Nutzen einer Funkkommunikationseinrichtung für das Übertragen von Medien- oder Steuerinformation von einem Telekommunikationsnetzwerk zu einem Empfangsgerät in einem Telekommunikationssystem, welches aufweist:
ein Telekommunikationsnetzwerk (PLMN);
eine Funkkommunikationseinrichtung (MS), welche mit dem Telekommunikationsnetzwerk (PLMN) verbunden ist;
ein Dienstesystem (SERV), welches mit dem Telekommunikationsnetzwerk (PLMN) verbunden ist;
ein Empfangsgerät (STB);
eine Telekommunikationsverbindung (CONN), welche zwischen der Funkkommunikationseinrichtung (MS) und dem Empfangsgerät (SRB) angeordnet ist;
**dadurch gekennzeichnet, dass** das System aufweist:
eine erste Übertragungs- bzw. Sendeeinheit (SU1) zum Senden der Information, welche sich auf das Empfangsgerät (STB) und/oder den gewünschten Dienst oder das gewünschte Produkt bezieht, an die Funkkommunikationseinrichtung;
eine zweite Sendeeinheit (SU2) zum Senden der Dienstanforderung an das Service-System (SERV), wenn der gewünschte Dienst oder das gewünschte Produkt ausgewählt wurde, wobei die Funkkommunikationseinrichtung genutzt wird;
eine Zuliefereinheit (TU) zum Liefern der Medien- oder Steuerinformation entsprechend der Dienstanforderung an die Funkkommunikationseinrichtung (MS); und
eine Weiterleitungseinheit (TRU) zum Weiterleiten der Dienstanforderung mit der Funkkommunikationseinrichtung (MS) an das Empfangsgerät (STB) und der Information, welche durch die Funkkommunikationseinrichtung (MS) von dem Service-System (SERV) empfangen wurde, an das Empfangsgerät (STB) über die Telekommunikationsverbindung (CONN).

16. System nach Anspruch 15, **dadurch gekennzeichnet, dass** das System eine Anzeigevorrichtung bzw. eine Display-Einheit (DU) besitzt, um die von der Funkkommunikationseinrichtung auf dem Empfangsgerät (STP) empfangene Information anzuzeigen.

17. System nach Anspruch 15, **dadurch gekennzeichnet, dass** das System eine Steuereinrichtung (CU) aufweist, um das Empfangsgerät (STB) basierend auf der Steuerinformation, welche von der Funkkommunikationseinrichtung (MS) erhalten wird, zu steuern.

18. System nach einem der vorausgehenden Ansprüche 15, 16 oder 17, **dadurch gekennzeichnet, dass** das System eine Liefervorrichtung (TFU) aufweist, um das Nutzer-Interface, welches über ein bestimmtes Empfangsgerät (STB) an die Funkkommunikationseinrichtung (MS) angeschlossen ist, zu beliefern.

19. System nach einem der vorausgehenden Ansprüche 15, 16, 17 oder 18, **dadurch gekennzeichnet, dass** das System eine Verschlüsselungs- und/oder Signiereinheit (SEC) aufweist, um die Information, welche von dem Empfangsgerät (STB) gesendet oder an das Empfangsgerät (STB) geliefert wird, zu verschlüsseln und/oder zu signieren.

20. System nach einem der vorausgehenden Ansprüche 15, 16, 17, 18 oder 19, **dadurch gekennzeichnet, dass** das System aufweist:
eine Beglaubigungseinheit (AU), um die Person, welche die Anforderung durchführt, und/oder das Empfangsgerät (STB) zu beglaubigen; und
eine Zahlungsbestelleinheit (CHU), um die Person, welche die Dienstanforderung durchführt, für den angeforderten Dienst zu belasten.

21. System nach einem der vorausgehenden Ansprüche 15, 16, 17, 18, 19 oder 20, **dadurch gekennzeichnet, dass**
das Service-System (SERV) eine Sendeeinheit (SU3) aufweist, um die aktuelle Anwendung, welche für die Interpretation der Medien- oder Steuerinformation benötigt wird, mit Hilfe der Funkkommunikationseinrichtung (MS) an das Empfangsgerät (STB) zu senden; und
das Empfangsgerät (STB) eine Empfangsvorrichtung (REU) aufweist, um die aktuelle Anwendung, welche für die Interpretation der Medien- oder Steuerinformation benötigt wird, zu empfangen.

22. System nach einem der vorausgehenden Ansprüche 15, 16, 17, 18, 19, 20 oder 21, **dadurch gekennzeichnet, dass** das Service-System (SERV) eine Sendevorrichtung (SU3) aufweist, um der Funkkommunikationseinrichtung (MS) eine Anwendung zu senden, welche benutzt wird, um die Datenübertragung von dem Service-System (SERV) an das Empfangsgerät (STB) zu steuern.

23. System nach einem der vorausgehenden Ansprüche 15, 16, 17, 18, 19, 20, 21 oder 22, **dadurch gekennzeichnet, dass** die Funkkommunikationseinrichtung (MS) eine Mobilstation ist.

24. System nach einem der vorausgehenden Ansprüche 15, 16, 17, 18, 19, 20, 21 oder 22, **dadurch gekennzeichnet, dass** die Funkkommunikationseinrichtung (MS) eine PDA-Einrichtung ist.

25. System nach einem der vorausgehenden Ansprüche 15, 16, 17, 18, 19, 20, 21, 22, 23 oder 24, **dadurch gekennzeichnet, dass** die Funkkommunikationsverbindung (CONN) eine Funk-Bluetooth-Verbindung ist.

26. System nach einem der vorausgehenden Ansprüche 15, 16, 17, 18, 19, 20, 21, 22, 23, 24 oder 25, **dadurch gekennzeichnet, dass** das Telekommunikationsnetzwerk (PLMN) ein Mobilkommunikationsnetzwerk und/oder ein Internet-Netzwerk ist.

## Revendications

1. Procédé d'utilisation d'un dispositif de communication sans fil pour transférer des informations de media ou de commande depuis un réseau de télécommunication vers un équipement récepteur, le procédé comprenant les étapes consistant à :
transmettre des informations entre un dispositif de communication sans fil et un équipement récepteur ;
**caractérisé en ce que** le procédé comprend en outre les étapes consistant à:
envoyer, depuis le dispositif de communication sans fil, une demande de service vers l'équipement récepteur en utilisant une communication sans fil ;
envoyer, depuis l'équipement récepteur vers le dispositif de communication sans fil, en réponse à la demande de service, des informations relatives à l'équipement récepteur et/ou le service ou le produit souhaité ;
envoyer la demande de service vers le système de service, lorsque le service ou le produit souhaité a été sélectionné en utilisant le dispositif de communication sans fil ;
délivrer les informations de media ou de commande conformément à la demande de service depuis le système de service vers le dispositif de communication sans fil ; et
transférer les informations de media ou de commande reçues par le dispositif de communication sans fil vers l'équipement récepteur.

2. Procédé selon la revendication 1, **caractérisé en ce que** les informations de media reçues en provenance du dispositif de communication sans fil s'affichent sur l'équipement récepteur.

3. Procédé selon la revendication 1, **caractérisé en ce que** l'équipement récepteur est commandé en fonction des informations de commande reçues en provenance du dispositif de communication sans fil.

4. Procédé selon l'une quelconque des revendications précédentes 1, 2 ou 3, **caractérisé en ce que** le dispositif de communication sans fil reçoit des informations relatives à l'équipement récepteur et/ou au service ou produit souhaité, en provenance de l'équipement récepteur.

5. Procédé selon l'une quelconque des revendications précédentes 1, 2, 3 ou 4, **caractérisé en ce que** le système de service reçoit des informations d'identification relatives à l'équipement récepteur.

6. Procédé selon l'une quelconque des revendications précédentes 1, 2, 3, 4 ou 5, **caractérisé en ce que** l'interface utilisateur connectée à un certain équipement récepteur est délivrée au dispositif de communication sans fil.

7. Procédé selon l'une quelconque des revendications précédentes 1, 2, 3, 4, 5 ou 6, **caractérisé en ce que** les informations transmises à partir de l'équipement récepteur, ou transmises vers l'équipement récepteur, sont chiffrées et/ou signées.

8. Procédé selon l'une quelconque des revendications précédentes 1, 2, 3, 4, 5, 6 ou 7, **caractérisé en ce que** les informations de media ou de commande sont délivrées uniquement à l'équipement récepteur identifié.

9. Procédé selon l'une quelconque des revendications précédentes 1, 2, 3, 4, 5, 6, 7 ou 8, **caractérisé en ce que** la demande de service est envoyée vers le système de service à partir de l'équipement récepteur.

10. Procédé selon l'une quelconque des revendications précédentes 1, 2, 3, 4, 5, 6, 7, ou 8, **caractérisé en ce que** la demande de service est envoyée vers le système de service à partir d'un dispositif de communication sans fil.

11. Procédé selon l'une quelconque des revendications précédentes 1, 2, 3, 4, 5, 6, 7, 8, 9 ou 10,
**caractérisé en ce que**
la partie qui envoie la demande de service et/ou l'équipement récepteur est authentifié(e) ; et
la partie qui envoie la demande de service est débitée du service ou du produit demandé, si le service ou le produit est téléchargeable.

12. Procédé selon l'une quelconque des revendications précédentes 1, 2, 3, 4, 5, 6, 7, 8, 9, 10 ou 11, **caractérisé en ce que** l'application effective requise pour interpréter les informations de media ou de commande, est envoyée par le biais du dispositif de communication sans fil, vers l'équipement récepteur.

13. Procédé selon l'une quelconque des revendications précédentes 1, 2, 3, 4, 5, 6, 7, 8, 9, 10, 11 ou 12, **caractérisé en ce que** le dispositif de communication sans fil reçoit une application qui commande la transmission de données depuis le système de service vers l'équipement récepteur.

14. Procédé selon l'une quelconque des revendications précédentes 1, 2, 3, 4, 5, 6, 7, 8, 9, 10, 11, 12 ou 13, **caractérisé en ce que** les fonctions du dispositif de communication sans fil sont intégrés comme faisant partie de l'équipement récepteur.

15. Système d'utilisation d'un dispositif de communication sans fil pour transférer des informations de media ou de commande depuis un réseau de télécommunication vers un équipement récepteur dans un système de télécommunication qui comprend:
un réseau de télécommunication (PLMN) ;
un dispositif de communication sans fil (MS), qui est connecté au réseau de télécommunication (PLMN) ;
un système de service (SERV), qui est connecté au réseau de télécommunication (PLMN) ;
un équipement récepteur (STB) ;
une connexion de télécommunication (CONN), qui est établie entre le dispositif de communication sans fil (MS) et l'équipement récepteur (STB) ;
**caractérisé en ce que** le système comprend :
une première unité de transmission (SU1) pour envoyer l'information relative à l'équipement récepteur (STB) et/ou au service ou produit souhaité, vers le dispositif de communication sans fil ;
une deuxième unité de transmission (SU2) pour envoyer la demande de service vers le système de service (SERV), lorsque le service ou produit souhaité a été sélectionné en utilisant le dispositif de communication sans fil ;
une unité de distribution (TU) pour délivrer les informations de media ou de commande conformément à la demande de service, vers le dispositif de communication sans fil (MS) ; et
une unité de transfert (TRU) pour transférer la demande de service avec le dispositif de communication sans fil (MS) vers l'équipement récepteur (STB) et les informations reçues par le dispositif de communication sans fil (MS) depuis le système de service (SERV) vers l'équipement récepteur (STB) par le biais de la connexion de télécommunications (CONN).

16. Système selon la revendication 15, **caractérisé en ce que** le système comprend des moyens d'affichage (DU) pour afficher les informations reçues en provenance du dispositif de communication sans fil sur l'équipement récepteur (STB).

17. Système selon la revendication 15, **caractérisé en ce que** le système comprend des moyens de commande (CU) pour commander l'équipement récepteur (STB) en se basant sur les informations de commande reçues en provenance du dispositif de communication sans fil (MS).

18. Système selon l'une quelconque des revendications précédentes 15, 16 ou 17, **caractérisé en ce que** le système comprend des moyens de distribution (TFU) pour délivrer l'interface utilisateur connectée à un certain équipement récepteur (STB) vers le dispositif de communication sans fil (MS).

19. Système selon l'une quelconque des revendications précédentes 15, 16, 17 ou 18, **caractérisé en ce que** le système comprend une unité de chiffrement
et/ou de signature (SEC) pour chiffrer et/ou signer les informations transmises depuis l'équipement récepteur (STB) ou délivrées à l'équipement récepteur (STB).

20. Système selon l'une quelconque des revendications précédentes 15, 16, 17, 18 ou 19, **caractérisé en ce que** le système comprend :
une unité d'authentification (AU) pour authentifier la partie qui envoie la demande et/ou l'équipement récepteur (STB) ; et
une unité d'ordre de paiement (CHU) pour débiter la partie qui envoie la demande de service, pour le service demandé.

21. Système selon l'une quelconque des revendications précédentes 15, 16, 17, 18, 19 ou 20, **caractérisé en ce que** le système de service (SERV) comprend des moyens de transmission (SU3) pour transmettre l'application effective requise pour interpréter les informations de media ou de commande, par le bais du dispositif de communication sans fil (MS) vers l'équipement récepteur (STB) ; et
l'équipement récepteur (STB) comprend des moyens de réception (REU) pour recevoir l'application effective requise pour interpréter les informations de media ou de commande.

22. Système selon l'une quelconque des revendications précédentes 15, 16, 17, 18, 19, 20 ou 21, **caractérisé en ce que** le système de service (SERV) comprend des moyens de transmission (SU3) pour envoyer, vers le dispositif de communication sans fil (MS), une application qui est utilisée pour commander la transmission des données depuis le système de service (SERV) vers l'équipement récepteur (STB).

23. Système selon l'une quelconque des revendications précédentes 15, 16, 17, 18, 19, 20, 21 ou 22, **caractérisé en ce que** le dispositif de communication sans fil (MS) est une station mobile.

24. Système selon l'une quelconque des revendications précédentes 15, 16, 17, 18, 19, 20, 21 ou 22, **caractérisé en ce que** le dispositif de communication sans fil (MS) est un dispositif assistant numérique personnel (PDA).

25. Système selon l'une quelconque des revendications précédentes 15, 16, 17, 18, 19, 20, 21, 22, 23 ou 24, **caractérisé en ce que** la connexion de télécommunications (CONN) est une connexion sans fil Bluetooth.

26. Système selon l'une quelconque des revendications précédentes 15, 16, 17, 18, 19, 20, 21, 22, 23, 24 ou 25, **caractérisé en ce que** le réseau de télécommunication (PLMN) est un réseau de télécommunication mobile et/ou un réseau Internet.
